# EUROPEAN PATENT APPLICATION

(11) **EP 4 588 997 A1**
(43) Date of publication of application: **23.07.2025**
(21) Application number: 23865506.2
(22) Date of filing: 12.09.2023
(51) Int. Cl.: C12H 6/02, B01D 3/00, C12C 11/11

(54) **DISTILLATION APPARATUS FOR DISTILLED LIQUOR, METHOD FOR PRODUCING DISTILLED LIQUOR, AND DISTILLATION SYSTEM FOR DISTILLED LIQUOR**

(30) Priority: 16.09.2022 JP 2022148267
(71) Applicant: Suntory Holdings Limited, Osaka-shi, Osaka 530-8203 (JP)
(72) Inventor: MATSUDA, Kenji, Mishima-gun, Osaka 618-0001 (JP); YOSHIDA, Kentaro, Mishima-gun, Osaka 618-0001 (JP); SHIGI, Yohei, Tokyo 108-8503 (JP); YOSHIDA, Shigehiko, Osaka-shi, Osaka 532-0003 (JP)
(74) Representative: Vossius & Partner Patentanwälte Rechtsanwälte mbB
(86) International application number: PCT/JP2023/033120
(87) International publication number: WO 2024/058154

(57) **Abstract**

The present invention aims to provide a distillation apparatus for a distilled spirit, a method of producing a distilled spirit, and a distillation system for a distilled spirit that can reduce CO₂ emissions while maintaining the quality of a distillate to be collected. The present invention relates to a distillation apparatus for a distilled spirit, including a distillation still and an electric furnace that externally heats the distillation still, and the like.

## Description

### TECHNICAL FIELD

The present invention relates to a distillation apparatus for a distilled spirit, a method of producing a distilled spirit, and a distillation system for a distilled spirit. The present invention specifically relates to a distillation apparatus for a distilled spirit, a method of producing a distilled spirit, and a distillation system for a distilled spirit that are suitable for production of a distilled spirit.

### BACKGROUND ART

A traditional method of producing a distilled spirit includes heating a distillation still using a direct-fired furnace in a step of distilling wash and/or a first distillate. This method directly heats the inside of the furnace using a gas flame to raise the furnace temperature.

Another known technique for distillation is heating a distillation still not using the direct-fired furnace but by steam circulated in pipes arranged in the distillation still.

For example, Patent Literature 1 discloses a method of producing a distilled spirit including distilling wash placed inside a distillation still by direct steam injection, indirect heating, or a combination of these.

### CITATION LIST

### - Patent Literature

Patent Literature 1: JP 4348568 B

### SUMMARY OF INVENTION

### - Technical Problem

The method of heating using a direct-fired furnace, however, involves an issue of using fossil fuels.

Also, the aroma of a distillate is less complex when the distillate is collected by the technique of heating using steam pipes. This is presumably because while the technique of heating using a direct-fired furnace causes a reaction that complicates the aroma, such as a Maillard reaction, the reaction is insufficient in the case of the technique of heating using steam pipes.

The present invention aims to provide a distillation apparatus for a distilled spirit, a method of producing a distilled spirit, and a distillation system for a distilled spirit that can reduce CO₂ emissions while maintaining the quality of a distillate to be collected.

### - Solution to Problem

With an aim to produce the distillation apparatus for a distilled spirit above, the present inventors focused on the furnace used to heat a distillation still. The present inventors then found that heating a distillation still using an electric furnace with less CO₂ emissions in place of a direct-fired furnace achieves an in-furnace temperature behavior equivalent to that in the case of a direct-fired furnace, thus complicating the aroma of the collected distillate while reducing the CO₂ emissions.

In other words, the present invention relates to, but is not limited to, the following distillation apparatus for a distilled spirit, method of producing a distilled spirit, and distillation system for a distilled spirit.
(1) A distillation apparatus for a distilled spirit, the apparatus including: a distillation still; and an electric furnace configured to externally heat the distillation still.
(2) The distillation apparatus for a distilled spirit according to (1) above, wherein the electric furnace includes a plurality of heaters.
(3) The distillation apparatus for a distilled spirit according to (2) above, wherein the plurality of heaters includes a heater disposed below a bottom of the distillation still.
(4) The distillation apparatus for a distilled spirit according to (2) or (3) above, wherein the plurality of heaters includes a heater surrounding a lower side wall of the distillation still.
(5) The distillation apparatus for a distilled spirit according to any one of (2) to (4) above, wherein the plurality of heaters is controlled independently of one another.
(6) The distillation apparatus for a distilled spirit according to any one of (1) to (5) above, wherein the distillation apparatus has a capability of raising a temperature inside the electric furnace to 1000°C or higher.
(7) A method of producing a distilled spirit, the method including: a distillation step of distilling an alcohol fermentation product in a distillation still by externally heating the distillation still using an electric furnace.
(8) The method of producing a distilled spirit according to (7) above, wherein the electric furnace includes a plurality of heaters, and in the distillation step, the distillation still is heated using the plurality of heaters.
(9) The method of producing a distilled spirit according to (8) above, wherein in the distillation step, the distillation still is heated using a heater disposed below a bottom of the distillation still.
(10) The method of producing a distilled spirit according to (8) or (9) above, wherein in the distillation step, the distillation still is heated using a heater surrounding a lower side wall of the distillation still.
(11) The method of producing a distilled spirit according to any one of (8) to (10) above, wherein in the distillation step, the plurality of heaters is controlled independently of one another.
(12) The method of producing a distilled spirit according to any one of (7) to (11) above, wherein in the distillation step, a temperature inside the electric furnace is raised to 1000°C or higher.
(13) A distillation system for a distilled spirit, the distillation system including: a distillation still; an electric furnace configured to externally heat the distillation still; and a control unit configured to control the electric furnace, the electric furnace including a plurality of heaters, the control unit being configured to control the plurality of heaters independently of one another.
(14) The distillation system for a distilled spirit according to (13) above, wherein the plurality of heaters includes a heater disposed below a bottom of the distillation still.
(15) The distillation system for a distilled spirit according to (13) or (14) above, wherein the plurality of heaters includes a heater surrounding a lower side wall of the distillation still.
(16) The distillation system for a distilled spirit according to any one of (13) to (15) above, wherein the distillation system has a capability of raising a temperature inside the electric furnace to 1000°C or higher.

### - Advantageous Effects of Invention

The present invention can provide a distillation apparatus for a distilled spirit, a method of producing a distilled spirit, and a distillation system for a distilled spirit that can reduce CO₂ emissions while maintaining the quality of a distillate to be collected.

### BRIEF DESCRIPTION OF DRAWINGS

FIG. 1 is a schematic view of an example of a distillation apparatus for a distilled spirit according to a first embodiment of the present invention.
FIG. 2 is a partially cutaway view schematically showing an electric furnace of the distillation apparatus for a distilled spirit shown in FIG. 1.
FIG. 3 is a flowchart showing an example of a method of producing a distilled spirit according to a second embodiment of the present invention.
FIG. 4 is a schematic view of an example of a distillation system for a distilled spirit according to a third embodiment of the present invention.

### DESCRIPTION OF EMBODIMENTS

A distillation apparatus for a distilled spirit according to a first embodiment of the present invention (hereinafter, such a distillation apparatus may also be referred to simply as a distillation apparatus according to the first embodiment) is an electric heating distillation apparatus for a distilled spirit including a distillation still and an electric furnace that externally heats the distillation still.

The distillation apparatus according to the first embodiment, which uses the electric furnace to externally heat the distillation still, can achieve an in-furnace temperature behavior equivalent to that in the case of a direct-fired furnace. This can impart aroma equivalent to that in the case of a direct-fired furnace to the collected distillate. Also, an electric furnace can reduce CO₂ emissions compared to a direct-fired furnace. This can reduce CO₂ emissions while maintaining the quality, particularly the aroma, of the distillate.

The "distilled spirit" herein means an alcoholic beverage produced through at least one distillation step. In other words, specific examples of the distilled spirits produced using the present invention include, but are not limited to, whiskey, gin, and *shochu.*

In the distillation still, an alcohol fermentation product is heated to evaporate into steam, which is then cooled to condense, so that a distillate is collected. The distillation still typically includes a pot where an alcohol fermentation product is heated to evaporate into steam, a condenser that cools the steam to obtain a distillate, and a pipe that connects the pot to the condenser.

The "alcohol fermentation product" herein means a liquid composition obtained by alcohol fermentation of grains or fruits, e.g., rice, malt and other cereal grains, grapes, and sweet potato, as raw materials of an alcoholic beverage. Specific examples thereof include wash and liquid compositions (e.g., a first distillate for a distilled spirit) derived from wash by, for example, filtering, distilling, or pressing the wash.

The electric furnace electrically heats the distillation still (in particular, the pot) and typically includes a heater which is a heating element, and a furnace that retains heat from the heater. The furnace surrounds the pot. The heater is on the inside (surface facing the pot) of the furnace.

The electric furnace during distillation may be a closed system. In other words, during distillation, transfer of matter such as air between the inside of the electric furnace and its surroundings may be limited.

Examples of the heating method employed by the heater include, but are not limited to, resistance heating, induction heating, arc heating, molten electromagnetic heating, high-frequency induction plasma heating, microwave heating, and dielectric heating, with resistance heating being particularly suitable.

The furnace may be any furnace and may be, for example, a furnace for direct-fired furnaces.

The electric furnace preferably includes a plurality of heaters. This allows the in-furnace temperature to be set finely according to the positions. Thus, distillates of different qualities can be produced.

In order to facilitate achievement of the in-furnace temperature behavior equivalent to the case of a direct-fired furnace, the plurality of heaters preferably includes a first heater disposed below a bottom of the distillation still, preferably includes a second heater surrounding a lower side wall of the distillation still, and more preferably includes the first heater and the second heater.

The "bottom of the distillation still" and the "lower side wall of the distillation still" herein typically correspond to a bottom of the pot and a lower side wall of the pot, respectively. The "lower side wall of the distillation still" may be, with the height of the side wall (body) of the pot being represented by H, a part that is H/2 of a side wall of the pot or below (i.e., the lower half) or a part that is H/3 of the side wall of the pot or below (i.e., the lowest part when the side wall of the pot is divided into three equal parts).

The plurality of heaters is preferably controlled independently of one another. This allows the temperature inside the furnace to be set more finely according to the positions. Thus, distillates of more different qualities can be produced.

From the same point of view, the first heater and the second heater are preferably controlled independently of each other.

The first heater may include a plurality of first heater units controlled independently of one another. Similarly, the second heater may include a plurality of second heater units controlled independently of one another.

The expression that a plurality of heaters (heater units) is controlled independently of one another herein means that current is supplied from outside of the distillation apparatus to the plurality of heaters (heater units) independently of one another and heating of the plurality of heaters (heater units) is controlled independently of one another. In this case, typically, the heaters (heater units) each independently include a heater line.

The distillation apparatus according to the first embodiment preferably has a capability of raising the temperature inside the electric furnace to 1000°C or higher. This allows more reliable production of a distillate of a quality equivalent to that in the case of a direct-fired furnace.

The "temperature inside the electric furnace" herein is the temperature of at least one position inside the electric furnace, preferably the temperature of the lower part inside the electric furnace, particularly the temperature of the area below the bottom of the pot. In other words, the distillation apparatus according to the first embodiment more preferably has a capability of raising the temperature of the lower part inside the electric furnace, particularly the temperature of the area below the bottom of the pot, to 1000°C or higher.

The upper limit of the temperature inside the electric furnace is not limited. The distillation apparatus according to the first embodiment may have a capability of raising the temperature inside the electric furnace (preferably the temperature of the lower part inside the electric furnace, particularly the temperature of the area below the bottom of the pot) to 1000°C or higher and 1200°C or lower. Such a heating capability is achievable, for example, by using the heaters described above and a heat insulator.

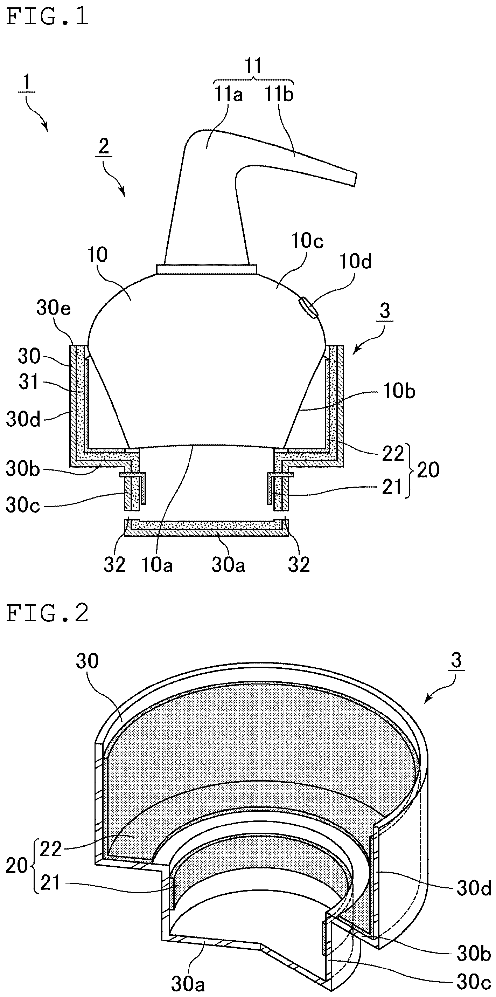

FIG. 1 is a schematic view of an example of the distillation apparatus for a distilled spirit according to the first embodiment of the present invention. FIG. 2 is a partially cutaway view schematically showing the electric furnace of the distillation apparatus for a distilled spirit shown in FIG. 1. A distillation apparatus 1 for a distilled spirit shown in FIG. 1 includes a distillation still 2 and an electric furnace 3 that externally heats the distillation still 2. FIG. 1 shows a side surface of the distillation still 2 and a cross section of the electric furnace 3.

The distillation still 2 is a pot still used to produce a distilled spirit and includes a pot 10 having an inverted truncated cone shape with a bulged top surface, a condenser (not shown), and a pipe 11 that connects the pot 10 and the condenser. The pot 10 includes a circular bottom 10a and a side wall (body) 10c that rises from the circumference of the bottom 10a. The bottom 10a corresponds to the lower base surface (the base surface with a smaller area) of the inverted truncated cone shape. The side wall 10c corresponds to the side surface and the bulged upper base surface of the inverted truncated cone shape. The top surface of the side wall 10c is provided with a manhole 10d. The pipe 11 includes a swan neck 11a that refluxes steam rising from the pot 10 and a line arm 11b that sends the steam to the condenser.

The distillation still 2 may have any shape and may be plain-shaped as shown in FIG. 1 or may be lantern-shaped or bulge-shaped. The pot 10 may have any shape.

The electric furnace 3 includes a heater 20 and a furnace 30 surrounding the pot 10. The furnace 30, as shown in FIG. 1 and FIG. 2, has a cylindrical shape with an open top and a double bottom and includes a circular first bottom 30a, an annular second bottom 30b above the first bottom 30a, a first side periphery 30c that connects the periphery of the first bottom 30a to the inner periphery of the second bottom 30b, and a second side periphery 30d that rises from the outer periphery of the second bottom 30b. A heat insulator 31 such as an aluminum board, a heat insulation brick, or the like is provided to the entire inside of the furnace 30. The heater 20 is exposed to the inside of the heat insulator 31. The heater 20 (heating element) is made of, for example, a ceramic such as molybdenum disilicide. The pot 10 is disposed on the inner periphery of the second bottom 30b of the furnace 30. The space between the pot 10 and a top edge 30e of the furnace 30 is sealed, so that the electric furnace 3 is a closed system during distillation.

The first side periphery 30c is provided at its lower part with through holes 32. Each of the through holes 32 is connected to a pipe (not shown) with a valve (not shown). Each valve is closed during distillation, so that the closed system inside the electric furnace 3 is maintained.

The heater 20 includes a first heater 21 disposed below the bottom 10a of the pot 10 and a second heater 22 that surrounds the lower side wall 10b defining the side wall 10c of the pot 10 and is controlled independently of the first heater 21. Inside the furnace 30 are provided thermometers (not shown) respectively for the first heater 21 and the second heater 22. The heaters are under the feedback control based on the measurement results from the corresponding thermometers.

The first heater 21 is disposed annularly as shown in FIG. 2, specifically along the first side periphery 30c of the furnace 30. The first heater 21 may be defined by a plurality of panel heaters, but is preferably defined by a plurality of linear (e.g., U-shaped) heaters.

The first heater 21 may fill the closed region of a circular or other shape. Specifically, for example, the first heater 21 may be disposed on the entire first bottom 30a of the furnace 30.

The first heater 21 may include a plurality of first heater units that are controlled independently of one another. The plurality of first heater units, for example, may be disposed annularly or may be tiled. Specifically, for example, the plurality of first heater units may be disposed in a peripheral direction along the first side periphery 30c of the furnace 30 or may be vertically and horizontally tiled on the first bottom 30a of the furnace 30.

In a case where the first heater 21 includes a plurality of first heater units, thermometers (not shown) may be provided inside the furnace 30 respectively for the plurality of first heater units, and the first heater units may be under the feedback control based on the measurement results from the corresponding thermometers.

The second heater 22 is disposed annularly as shown in FIG. 2, specifically along the second bottom 30b and the second side periphery 30d of the furnace 30. The second heater 22 may be defined by a plurality of linear (e.g., U-shaped) heaters, but is preferably defined by a plurality of panel heaters.

The second heater 22 may be any heater that can heat the lower side wall 10b of the pot 10, and can appropriately be disposed in the region from the second bottom 30b to the second side periphery 30d of the furnace 30. The second heater 22 may be disposed entirely or partially in the region from the second bottom 30b to the second side periphery 30d of the furnace 30. The second heater 22 may be disposed as one heater or as separate heaters at a plurality of positions apart from one another in the region from the second bottom 30b to the second side periphery 30d of the furnace 30. The second heater 22 may be disposed anywhere in the region from the top part to the lower part of the second side periphery 30d. Preferably, the second heater 22 is disposed on at least one of the second bottom 30b or the top part of the second side periphery 30d of the furnace 30 because the distance from the lower side wall 10b of the pot 10 is relatively short.

The second heater 22 may be disposed only on the second bottom 30b of the furnace 30 or may be disposed only on the second side periphery 30d of the furnace 30.

The second heater 22 may include a plurality of second heater units that are controlled independently of one another. The plurality of second heater units, for example, may be disposed annularly or may be tiled. Specifically, for example, the plurality of second heater units may be disposed in a peripheral direction along the second bottom 30b and the second side periphery 30d of the furnace 30 or may be vertically and horizontally tiled on the second bottom 30b and the second side periphery 30d of the furnace 30.

In a case where the second heater 22 includes a plurality of second heater units, thermometers (not shown) may be provided inside the furnace 30 respectively for the plurality of second heater units, and the second heater units may be under the feedback control based on the measurement results from the corresponding thermometers.

In the distillation apparatus 1 for a distilled spirit, supply of current to the heater 20 raises the temperature inside the electric furnace 3, thus externally heating the pot 10. With use of the electric furnace 3, an in-furnace temperature behavior equivalent to that in the case of a direct-fired furnace can be achieved. For example, in the distillation apparatus 1 for a distilled spirit, as in the case of a direct-fired furnace, the temperature of the area below the pot 10 can be raised to 1000°C or higher.

In the distillation apparatus 1 for a distilled spirit, current is supplied to the first heater 21 and the second heater 22 independently of each other and the amounts of heat generated by the respective heaters are controlled independently of each other. The temperatures of the first heater 21 and the second heater 22 are appropriately settable; for example, the temperature of the first heater 21 may be set at 1000°C or higher, while the temperature of the second heater 22 may be set below 1000°C.

Next, a method of producing a distilled spirit according to a second embodiment of the present invention is described (hereinafter, the method may also be referred to simply as "the production method according to the second embodiment"). The structures employed in the production method according to the second embodiment common to the structures of the distillation apparatus according to the first embodiment (e.g., structures of the distillation still and the electric furnace) are omitted as appropriate in the following description since the structures in the first embodiment are applicable to the method according to the second embodiment.

The production method according to the second embodiment includes a distillation step of distilling an alcohol fermentation product in a distillation still by externally heating the distillation still using an electric furnace.

The production method according to the second embodiment includes externally heating the distillation still using the electric furnace in the distillation step. Thus, as in the case of the distillation apparatus according to the first embodiment, CO₂ emissions can be reduced while the quality, particularly the aroma, of a distillate to be collected is maintained.

As in the case of the distillation apparatus according to the first embodiment, the production method according to the second embodiment preferably has the following structure.

The electric furnace preferably includes a plurality of heaters and heats the distillation still using the plurality of heaters in the distillation step.

In the distillation step, the distillation still is preferably heated using the first heater disposed below the bottom of the distillation still, the distillation still is preferably heated using the second heater surrounding the lower side wall of the distillation still, and the distillation still is more preferably heated using the first heater and the second heater.

In the distillation step, the plurality of heaters is preferably controlled independently of one another.

In the distillation step, the first heater and the second heater are preferably controlled independently of each other.

The first heater may include a plurality of heater units that are controlled independently of one another. Similarly, the second heater may include a plurality of heater units that are controlled independently of one another.

In the distillation step, the temperature inside the electric furnace is preferably 1000°C or higher, and the temperature of the lower part inside the electric furnace, particularly the area below the bottom of the pot, is more preferably 1000°C or higher.

The phrase "the temperature inside the electric furnace in the distillation step is 1000°C or higher" herein means that the temperature inside the electric furnace is 1000°C or higher during at least part of the distillation period.

The upper limit of the temperature inside the electric furnace in the distillation step is not limited. In the distillation step, the temperature inside the electric furnace (preferably the temperature of the lower part inside the electric furnace, particularly the temperature of the area below the bottom of the pot) may be 1000°C or higher and 1200°C or lower.

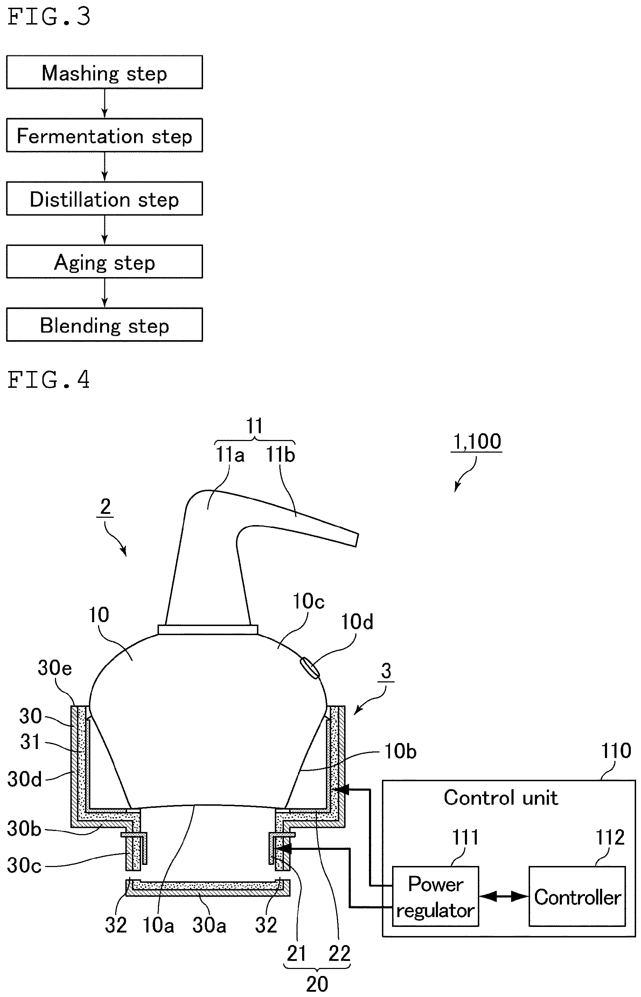

FIG. 3 is a flowchart showing an example of a method of producing a distilled spirit according to a second embodiment of the present invention. A case where a distilled spirit is produced from malt as a raw material is described with reference to FIG. 3.

First, in the mashing step, malt as a raw material is finely ground and fed into a mashing tank together with water for mashing, so that the starch of the malt is broken down into sugars by the enzyme in the malt. The malt mixture is then filtered to obtain wort.

Next, in the fermentation step, the wort is transferred to a washback where yeast is added. The yeast converts the sugars of the wort to alcohol and carbon dioxide gas, so that "wash" is produced that has aroma components unique to a distilled spirit made from malt as a raw material.

Next, in the distillation step, the wash is distilled. In this step, in the distillation apparatus 1 for a distilled spirit shown in FIG. 1, as described above, the distillation still 2 is externally heated using the electric furnace 3 to distil the wash inside the distillation still 2. As a result, a distillate with a high alcohol concentration is collected, and thus a distilled spirit with favorable aroma is obtained by the present invention.

The distillation can be performed a plurality of times. In this case, the plurality of distillations includes at least one distillation by heating using the electric furnace 3 to obtain a distilled spirit with favorable aroma by the present invention.

In the distillation step, distillation stills with different sizes and shapes may be properly used to generate distillates with various tastes.

In the production method according to the second embodiment, a distillate not having gone through the distillation using the distillation apparatus 1 for a distilled spirit, **e.g.,** a distillate obtained using a direct-fired furnace, may also be used as well as the distillate collected from distillation using the distillation apparatus 1 for a distilled spirit.

Next, in an aging step, the distillate obtained through distillation may be aged in a cask for a long time.

Lastly, in a blending step, various aged unprocessed alcoholic beverages may be blended.

A distilled spirit produced by the production method according to the second embodiment at least partially contains an unprocessed alcoholic beverage having been distilled using the distillation apparatus 1 for a distilled spirit, and may contain an unprocessed alcoholic beverage not having been distilled using the distillation apparatus 1 for a distilled spirit, e.g., an unprocessed alcoholic beverage obtained using a direct-fired furnace.

Subsequently, a distillation system for a distilled spirit according to a third embodiment of the present invention is described (hereinafter, the distillation system may also be referred to simply as a distillation system according to the third embodiment). The structures of the distillation system according to the third embodiment common to the distillation apparatus according to the first embodiment (e.g., structures of the distillation still and the electric furnace) are omitted as appropriate in the following description since the structures in the first embodiment are applicable to the distillation system according to the third embodiment.

The distillation system according to the third embodiment includes a distillation still, an electric furnace that externally heats the distillation still, and a control unit that controls the electric furnace. The electric furnace includes a plurality of heaters. The control unit controls the plurality of heaters independently of one another.

The distillation system according to the third embodiment externally heats the distillation still using the electric furnace. Thus, as in the case of the distillation apparatus according to the first embodiment, CO₂ emissions can be reduced while the quality, particularly the aroma, of a distillate to be collected is maintained. Since the plurality of heaters is controlled independently of one another, distillates of more different qualities can be produced.

The control unit controls the electric furnace, particularly the plurality of heaters, and typically includes a power regulator that supplies current to the plurality of heaters and a controller that controls the plurality of heaters via the power regulator.

As in the case of the distillation apparatus according to the first embodiment, the distillation system according to the third embodiment preferably has the following structure.

The plurality of heaters preferably includes a first heater disposed below the bottom of the distillation still, preferably includes a second heater surrounding the lower side wall of the distillation still, and more preferably includes the first heater and the second heater.

In a case where the plurality of heaters includes the first heater and the second heater, the first heater and the second heater are controlled independently of each other.

The first heater may include a plurality of first heater units that are controlled independently of one another. Similarly, the second heater may include a plurality of second heater units that are controlled independently of one another.

The distillation system according to the third embodiment preferably has a capability of raising the temperature inside the electric furnace to 1000°C or higher, more preferably a capability of raising the temperature of the lower part inside the electric furnace, particularly the temperature of the area below the bottom of the pot, to 1000°C or higher. The distillation system according to the third embodiment may also have a capability of raising the temperature inside the electric furnace (preferably the temperature of the lower part inside the electric furnace, particularly the temperature of the area below the bottom of the pot) to 1000°C or higher and 1200°C or lower.

FIG. 4 is a schematic view of an example of a distillation system for a distilled spirit according to a third embodiment of the present invention. A distillation system 100 for a distilled spirit shown in FIG. 4 includes a distillation still 2, an electric furnace 3 that externally heats the distillation still 2, and a control unit 110 that controls the electric furnace 3. The electric furnace 3 includes a first heater 21 and a second heater 22 as a plurality of heaters. The control unit 110 controls the first heater 21 and the second heater 22 independently of each other.

As shown in FIG. 1 and FIG. 4, the distillation system 100 for a distilled spirit shown in FIG. 4 is substantially the same as the distillation apparatus 1 for a distilled spirit shown in FIG. 1, except for further including the control unit 110.

The control unit 110 includes a power regulator 111 that supplies current to the first heater 21 and the second heater 22 and a controller 112 that controls the first heater 21 and the second heater 22 via the power regulator 111. The first heater 21 and the second heater 22 each are connected to the power regulator 111. The power regulator 111 is connected to the controller 112. To the controller 112 are connected thermometers installed inside the furnace 30.

The controller 112 is defined by, for example, a computer including a central processing unit (CPU), a storage unit (memory or storage), I/O ports, UI, and other components. The functions of the controller 112 are obtained by execution by the CPU of software programs (e.g., temperature control program for each heater) stored in the storage unit.

In the distillation system 100 for a distilled spirit, the controller 112 uses the power regulator 111 to control the amount of current flowing to the first heater 21 and that to the second heater 22, and thus the amount of heat (temperature) generated by the first heater 21 and that by the second heater 22 are individually controlled. The controller 112 feedback controls the heaters (or heater units) based on the measurement results from the corresponding thermometers during distillation.

### EXAMPLES

The following shows examples that more specifically describe the present invention. The present invention is not limited to these examples.

### <Example 1>

The distillation system 100 for a distilled spirit shown in FIG. 4 and a spirit still with steam pipes for heating were used to produce a distillate by distilling wash twice (first distillation and second distillation). Specifically, about 2000 L of wash produced by an ordinary method was fed into the distillation still 2, which was then heated. After one hour of heating, the temperature inside the electric furnace 3 was confirmed to have reached approximately 1200°C. The first distillation step was then performed for three and a half hours from when the temperature reached approximately 1200°C. The obtained first distillate in an amount of about 800 L was fed into a spirit still (not shown) where the second distillation step was performed for three hours by heating using the steam pipes.

### <Comparative Example 1>

A direct-fired furnace and a spirit still with steam pipes for heating were used to produce a distillate by distilling wash twice (first distillation and second distillation). Specifically, about 2000 L of wash produced by an ordinary method was fed into a distillation still, which was then heated. After one hour of heating, the temperature inside the direct-fired furnace was confirmed to have reached approximately 1200°C. The first distillation step was then performed for three and a half hours from when the temperature reached approximately 1200°C. The obtained first distillate in an amount of about 800 L was fed into a spirit still (not shown) where the second distillation step was performed for three hours by heating using the steam pipes.

### <Comparative Example 2>

Steam pipes were used to produce a distillate by distilling wash inside a distillation still twice (first distillation and second distillation). Specifically, about 2000 L of wash produced by an ordinary method was fed into a distillation still, which was then heated. After one hour of heating, the temperature inside the distillation still was confirmed to have reached approximately 100°C. The first distillation step was then performed for about three hours from when the temperature reached approximately 100°C. The obtained first distillate in an amount of about 800 L was fed into a spirit still (not shown) where the second stellation step was performed for three hours by heating using the steam pipes.

In Example 1 and Comparative Example 1, equivalent in-furnace behaviors were achieved in the first distillation step. Both in Example 1 and in Comparative Example 1, the temperature of the area below the bottom of the pot was confirmed to have reached approximately 1200°C after a lapse of a predetermined period of time from the start of heating in the first distillation step.

### <Sensory evaluation>

The aromatic complexity of each of the obtained distillates was evaluated by six trained panelists. Each panelist took a small taste of each distillate sample to evaluate the aromatic complexity. A distillate was evaluated to have an aromatic complexity when the six panelists unanimously evaluated that the distillate had an aromatic complexity. A distillate was evaluated to have a low aromatic complexity when the six panelists unanimously evaluated that the distillate had a low aromatic complexity. The following Table 1 shows the results.

### <CO₂ emissions>

The following Table 1 also shows the calculation results of CO₂ emissions from the first distillation in each of Example 1 and Comparative Examples 1 and 2.

**[Table 1]**

| | Device for heating wash still | Aromatic complexity | CO₂ emissions |
|---|---|---|---|
| Example 1 | Electric furnace | Complex | 0 kg/batch |
| Comparative Example 1 | Direct-fired furnace | Complex | 249 kg/batch |
| Comparative Example 2 | Steam pipes | Low | 144 kg/batch |

The results in Table 1 show that the use of the electric furnace imparted an aromatic complexity to the distillate as in the case of using the direct-fired furnace. In contrast, the use of the steam pipes imparted a low aromatic complexity to the distillate. The use of the electric furnace also can significantly reduce CO₂ emissions compared to the cases of using the direct-fired furnace and using the steam pipes.

### REFERENCE SIGNS LIST

- 1: distillation apparatus for a distilled spirit
- 2: distillation still
- 3: electric furnace
- 10: pot
- 10a: bottom
- 10b: lower side wall
- 10c: side wall (body)
- 10d: manhole
- 11: pipe
- 11a: swan neck
- 11b: line arm
- 20: heater
- 21: first heater
- 22: second heater
- 30: furnace
- 30a: first bottom
- 30b: second bottom
- 30c: first side periphery
- 30d: second side periphery
- 30e: top edge
- 31: heat insulator
- 32: through hole
- 100: distillation system for a distilled spirit
- 110: control unit
- 111: power regulator
- 112: controller

## Claims

1. A distillation apparatus for a distilled spirit, the apparatus comprising:
a distillation still; and
an electric furnace configured to externally heat the distillation still.

2. The distillation apparatus for a distilled spirit according to claim 1,
wherein the electric furnace includes a plurality of heaters.

3. The distillation apparatus for a distilled spirit according to claim 2,
wherein the plurality of heaters includes a heater disposed below a bottom of the distillation still.

4. The distillation apparatus for a distilled spirit according to claim 2 or 3,
wherein the plurality of heaters includes a heater surrounding a lower side wall of the distillation still.

5. The distillation apparatus for a distilled spirit according to claim 2 or 3,
wherein the plurality of heaters is controlled independently of one another.

6. The distillation apparatus for a distilled spirit according to any one of claims 1 to 3,
wherein the distillation apparatus has a capability of raising a temperature inside the electric furnace to 1000°C or higher.

7. A method of producing a distilled spirit, the method comprising:
a distillation step of distilling an alcohol fermentation product in a distillation still by externally heating the distillation still using an electric furnace.

8. A distillation system for a distilled spirit, the distillation system comprising:
a distillation still;
an electric furnace configured to externally heat the distillation still; and
a control unit configured to control the electric furnace,
the electric furnace including a plurality of heaters,
the control unit being configured to control the plurality of heaters independently of one another.
